# FASCICULE DE BREVET EUROPEEN

(11) **EP 4 094 007 B1**
(45) Date de publication et mention de la délivrance du brevet: **29.07.2026**
(21) Numéro de dépôt: 21700573.5
(22) Date de dépôt: 14.01.2021
(51) Int. Cl.: F17C 3/04, F17C 3/08, F17C 9/00, F17C 13/02

(54) **RÉSERVOIR CRYOGÉNIQUE MOBILE ET PROCÉDÉ D'APPROVISIONNEMENT**
MOBILER KRYOGENTANK UND BEREITSTELLUNGSVERFAHREN
MOBILE CRYOGENIC TANK AND PROVISIONING METHOD

(30) Priorité: 24.01.2020 FR 2000685
(43) Date de publication de la demande: 30.11.2022
(73) Titulaire: L'Air Liquide, Société Anonyme pour l'Etude et l'Exploitation des Procédés Georges Claude, 75007 Paris (FR)
(72) Inventeur: VARRASSI, Lucien, 57640 ARGANCY (FR); CADEAU, Phillippe, 38360 SASSENAGE (FR); FAYER, Thomas, 38360 SASSENAGE (FR); DUVAL, Stéphane, 38360 SASSENAGE (FR)
(74) Mandataire: Air Liquide
(86) Numéro de dépôt international: PCT/EP2021/050644
(87) Numéro de publication internationale: WO 2021/148297

(56) Documents cités:
- EP-A1- 3 953 636
- DE-A1- 102008 019 594
- KR-A- 20130 058 968
- US-A1- 2013 327 421

## Description

L'invention concerne un réservoir cryogénique ainsi qu'un procédé d'approvisionnement utilisant un tel réservoir. L'invention concerne plus particulièrement un réservoir cryogénique mobile pour le transport de fluide cryogénique, notamment d'hydrogène ou d'hélium liquéfié comprenant une enveloppe interne destinée à contenir le fluide cryogénique, une enveloppe externe disposée autour de l'enveloppe interne et délimitant un espacement entre les deux enveloppes, ledit espacement contenant un isolant thermique, la première enveloppe ayant une forme générale cylindrique s'étendant selon un axe longitudinal central, en configuration de transport et d'utilisation du réservoir (1), l'axe longitudinal central étant orienté horizontalement, le réservoir comprenant un ensemble de capteurs de température mesurant la température du fluide dans l'enveloppe interne.

L'invention concerne en particulier les semi-remorques ou ISO conteneurs de transport de fluides cryogéniques qui transportent du gaz liquéfié (avec une phase gazeuse plus ou moins importante en partie supérieure qui peut occuper par exemple de 10% à plus de 90% du volume de l'enveloppe intérieure).

Le fluide transporté peut être par exemple de l'hélium, de l'hydrogène, du gaz naturel ou tout autre gaz ou mélange.

Un tel réservoir mobile est prévu pour approvisionner en liquide des stations (remplir des stockages fixes par exemple) ayant des caractéristiques diverses.

Il est assez difficile de connaître le niveau de liquide et les conditions thermodynamiques du fluide (liquide) transporté. Ceci a pourtant une grande importance pour permettre une livraison efficace à plusieurs stations.

Un but de la présente invention est de pallier tout ou partie des inconvénients de l'art antérieur relevés ci-dessus.

Dans le réservoir selon l'invention, tel que définit par la revendication 1, l'ensemble de capteurs de température est situé sur la face externe de l'enveloppe interne et mesurent la température de ladite enveloppe, l'ensemble de capteurs de température comprenant un capteur inférieur disposé au niveau de l'extrémité inférieure de l'enveloppe interne située sous l'axe longitudinal central, l'ensemble de capteurs de température comprenant en outre une pluralité de capteurs intermédiaires répartis sur deux faces latérales de l'enveloppe interne de part et d'autre de l'axe longitudinal central, la pluralité de capteurs intermédiaires étant répartis verticalement entre l'extrémité inférieure de l'enveloppe interne située sous l'axe longitudinal central et l'extrémité supérieure de l'enveloppe interne située au-dessus de l'axe longitudinal central.

Le document WO2020207594A décrit un réservoir selon l'art antérieur, et le document DE10 2008 019594 décrit un réservoir la conforme au préambule de la revendication 1.

L'invention est définie par la partie caractérisante

Par ailleurs, des modes de réalisation de l'invention peuvent comporter l'une ou plusieurs des caractéristiques suivantes :
- l'ensemble de capteurs de température est situé dans la partie centrale du réservoir entre les deux extrémités longitudinales,
- la pluralité de capteurs intermédiaires comprend deux ensembles de trois à dix capteurs chacun, les deux ensembles de capteurs étant situés respectivement sur deux faces latérales opposées de l'enveloppe interne, de part et d'autre de l'axe longitudinal central, les capteurs étant espacés les uns des autres verticalement entre l'extrémité inférieure et l'extrémité supérieure de l'enveloppe interne,
- les deux ensembles de capteurs intermédiaires comprennent chacun quatre, cinq, six, sept ou huit capteurs,
- l'ensemble de capteurs de température comprend un capteur supérieur disposé au niveau de l'extrémité supérieure de l'enveloppe interne située au-dessus de l'axe longitudinal central,
- l'ensemble de capteurs de température comprend plusieurs groupes de capteurs situé à deux emplacement longitudinaux distincts selon la direction longitudinale, chacun des deux groupes de capteurs de température comprenant une pluralité de capteurs intermédiaires répartis sur deux faces latérales de l'enveloppe interne de part et d'autre de l'axe longitudinal central et répartis verticalement entre l'extrémité inférieure de l'enveloppe située sous l'axe longitudinal central et l'extrémité supérieure de l'enveloppe située au-dessus de l'axe longitudinal central,
- le réservoir comprend un organe électronique de stockage et de traitement de données comprenant un microprocesseur et/ou un calculateur, ledit organe électronique étant relié à l'ensemble de capteurs de température et étant configuré pour recevoir les valeurs de températures mesurées par lesdits capteurs et déterminer au moins l'un parmi : la température du fluide dans le réservoir, le niveau de liquide dans le réservoir, le volume de liquide dans le réservoir,
- le réservoir comprend un ensemble de conduite(s) munie(s) de vanne(s) raccordée(s) à l'enveloppe interne et débouchant l'extérieur du réservoir pour le remplissage et le soutirage de l'enveloppe interne,
- le réservoir comprend au moins un capteur intermédiaire situé à position verticale de l'enveloppe interne correspondant à un niveau maximal de remplissage en liquide du réservoir et notamment au niveau d'arrêt de remplissage dudit réservoir, correspondant par exemple entre 90 et 98%, et notamment 94% du volume en eau de l'enveloppe interne.

L'invention concerne également un procédé d'approvisionnement en fluide cryogénique d'une pluralité de stations de stockage et d'utilisation de fluide cryogénique, tel que définit par la revendication 10, l'approvisionnement des stations étant réalisé au moyen d'au moins un réservoir cryogénique mobile conforme à l'une quelconque des caractéristiques ci-dessus ou ci-dessous, dans lequel les stations de stockage et d'utilisation de fluide comportent chacune un stockage de fluide gaz liquéfié configuré pour stocker le fluide cryogénique à des conditions thermodynamiques de pression et de température déterminées, le procédé comprenant une étape de mesure de la température et de la pression du fluide cryogénique dans le réservoir cryogénique mobile, une étape de lecture des conditions thermodynamiques déterminées de température et de pression de chacun des stockage de fluide gaz liquéfié des stations, le procédé comprenant une étape de livraison de fluide cryogénique auxdites stations avec des quantités de fluide respectives en fonction de la température et de la pression du fluide cryogénique mesurées dans le réservoir cryogénique mobile et des conditions thermodynamiques déterminées de température et de pression de chacun des stockage de fluide gaz liquéfié des stations.

Selon d'autres particularités possibles :
le procédé comprend une livraison de fluide cryogénique successivement à première station puis à une seconde station, le procédé comportant, préalablement à la livraison de fluide cryogénique à la première station, une étape d'augmentation de la pression dans le réservoir cryogénique mobile via un apport déterminé d'énergie en prélevant du fluide cryogénique qui est réchauffé avant d'être réinjecté dans le réservoir cryogénique mobile, le procédé comprenant une étape de calcul des conditions de pression et de température d'équilibre futures dans le réservoir cryogénique mobile à l'issue de la livraison de fluide cryogénique à partir de la quantité d'énergie apportée précitée et de la température et de la pression du fluide cryogénique dans le réservoir cryogénique mobile, le procédé comprenant une interruption de la livraison de fluide cryogénique à la première station lorsque les conditions de pression et de température d'équilibre futures dans le réservoir cryogénique mobile calculées sont supérieures aux conditions thermodynamiques déterminées de température et de pression du stockage de la seconde station,
l'étape de livraison de fluide cryogénique auxdites stations est réalisé selon un ordre chronologique déterminé fonction de la température et de la pression du fluide cryogénique dans le réservoir cryogénique mobile et des conditions thermodynamiques déterminées de température et de pression de chacun des stockage de fluide gaz liquéfié des stations.

L'invention peut concerner également tout dispositif ou procédé alternatif comprenant toute combinaison des caractéristiques ci-dessus ou ci-dessous dans le cadre des revendications.

D'autres particularités et avantages apparaîtront à la lecture de la description ci-après, faite en référence aux figures dans lesquelles :
[Fig. 1] représente une vue de côté, schématique et partielle, d'un premier exemple de réservoir selon l'invention,
[Fig. 2] représente une section transversale, schématique et partielle, d'un autre exemple de réservoir selon l'invention,
[Fig. 3] représente une vue de côté, schématique et partielle, d'un deuxième exemple de réservoir selon l'invention,
[Fig. 4] représente une schématique et partielle illustrant un exemple d'approvisionnement de stations en fluide cryogénique au moyen d'un réservoir mobile.

Le réservoir 1 cryogénique mobile comprend une enveloppe 2 interne destinée à contenir le fluide cryogénique. Cette enveloppe 2 interne, qui a par exemple une forme générale cylindrique, délimite le volume de stockage de fluide. Par exemple, l'enveloppe 2 interne comprend une portion cylindrique de section circulaire (virole en acier inoxydable compatible avec le fluide stocké ou tout autre matériau approprié) aux extrémités de laquelle sont soudés des extrémités courbes.

Le réservoir 1 comprend également une enveloppe 3 externe disposée autour de l'enveloppe 2 interne et délimitant un espacement entre les deux enveloppes 2, 3. L'enveloppe 3 externe peut être constituée par exemple d'acier carbone, d'acier inoxydable ou d'aluminium et peut le cas échéant être renforcée par des anneaux soudés à l'intérieur et/ou à l'extérieur. Le système de maintien de l'enveloppe 2 interne dans l'enveloppe 3 externe peut comprend une liaison à une extrémité longitudinale et/ou un ensemble de bras de maintien. Par exemple, l'enveloppe 2 interne est maintenue et supportée dans l'enveloppe 3 externe par des pièces cylindriques ou des tirants en acier inoxydable, fixes à l'arrière et mobiles à l'avant (l'avant et l'arrière faisant référence aux extrémités longitudinales), de façon à permettre la libre contraction de l'enveloppe 2 intérieure lors de sa mise en froid.

Classiquement, l'espacement contient un isolant 4 thermique : vide d'air et/ou matériaux isolant tel qu'une isolation multicouche (MLI) ou tout autre isolant approprié.

L'espace inter-parois peut notamment être garni d'un isolant multicouche, être mis sous vide puis scellé par un clapet venant s'appliquer sur un orifice de pompage. Un clapet auxiliaire peut être prévu pour mesurer le vide et éventuellement permettre un re pompage. Un dispositif de sécurité est de préférence prévu pour éviter toute surpression accidentelle dans l'espace inter-paroi. A la partie inférieure du fond arrière, une plaque de sortie en inox peut être prévue pour assurer le passage des tuyauteries de liaison avec l'enveloppe 2 interne.

L'enveloppe 3 externe peut avoir une forme semblable à celle de l'enveloppe 2 interne.

La première enveloppe 2 a une forme générale cylindrique qui s'étend selon un axe A longitudinal central, par exemple, la portion cylindrique (de préférence de révolution) s'étend autour d'un axe A central de symétrie. En configuration d'utilisation du réservoir 1 cet axe A longitudinal central est horizontal (ou sensiblement horizontal car il peut avoir une légère inclinaison si besoin). C'est-à-dire que le réservoir 1 est oblong et du type « horizontal » (par opposition aux réservoirs verticaux fixes) .

L''enveloppe 3 externe peut être montée sur châssis à supports indépendants. Ce châssis peut comprendre des pièces de liaison (berces) et peut être relié à un train roulant doté d'un équipement de freinage conforme aux normes en vigueur, avec ailes et bavettes. D'autres supports possibles peuvent recevoir des béquilles relevables et une sellette d'attelage équipée d'une cheville ouvrière normalisée.

Le réservoir 1 comporte un ensemble de capteurs de température mesurant la température du fluide dans l'enveloppe 2 interne. Cet ensemble de capteurs de température est situé sur la face externe de l'enveloppe 2 interne et mesurent la température du fluide indirectement en mesurant la température de la face extérieure de ladite enveloppe 2.

Les capteurs de température sont ainsi installés de préférence entre l'enveloppe interne (sur la peau externe) et l'isolation 4.

L'ensemble de capteurs de température comprend au moins un capteur 5 inférieur disposé au niveau de l'extrémité inférieure de l'enveloppe 2 interne, sous l'axe A longitudinal central. Ce capteur 5 inférieur est par exemple situé sur la génératrice inférieure de la paroi cylindrique. Ce capteur 5 inférieur mesure ainsi la température au point le plus bas de l'enveloppe 2 interne (en principe en permanence au niveau de la phase liquide) .

L'ensemble de capteurs de température comprend en outre une pluralité de capteurs 6 intermédiaires répartis sur deux faces latérales de l'enveloppe 2 interne de part et d'autre de l'axe A longitudinal central. La pluralité de capteurs 6 intermédiaires sont répartis verticalement entre l'extrémité inférieure de l'enveloppe située sous l'axe A longitudinal central et l'extrémité supérieure de l'enveloppe 2 interne située au-dessus de l'axe A longitudinal central.

De plus, l'ensemble de capteurs de température comprend de préférence également au moins un capteur 7 supérieur disposé au niveau de l'extrémité supérieure de l'enveloppe 2 interne située au-dessus de l'axe A longitudinal central. Le capteur 7 supérieur est par exemple situé sur la génératrice supérieure de la paroi cylindrique, au point le plus haut de l'enveloppe 2 interne.

De préférence, le réservoir 1 comprend au moins un capteur 6 intermédiaire situé à position verticale de l'enveloppe 2 interne correspondant à un niveau maximal de remplissage en liquide du réservoir 1. Par exemple, ce capteur peut être situé au niveau déterminé qui correspond au niveau d'arrêt de remplissage dudit réservoir 1, correspondant par exemple à 90 et 98%, et notamment 94% du volume en eau de l'enveloppe 2 interne. Ce capteur de température permettra de détecter de façon fiable, via une mesure de température, lorsque le niveau de liquide atteint la limite de remplissage. Ceci pourra être utilisé pour interrompre le remplissage du réservoir. Le cas échant ce ou ces capteurs peuvent remplacer le ou les capteurs7 supérieur(s) décrit(s) ci-dessus.

L'ensemble de capteurs 5, 6, 7 de température est situé de préférence dans la partie centrale du réservoir 1 entre les deux extrémités longitudinales, c'est-dire par exemple au milieu du réservoir 1 selon la direction longitudinale, entre les extrémités avant et arrière du réservoir 1.

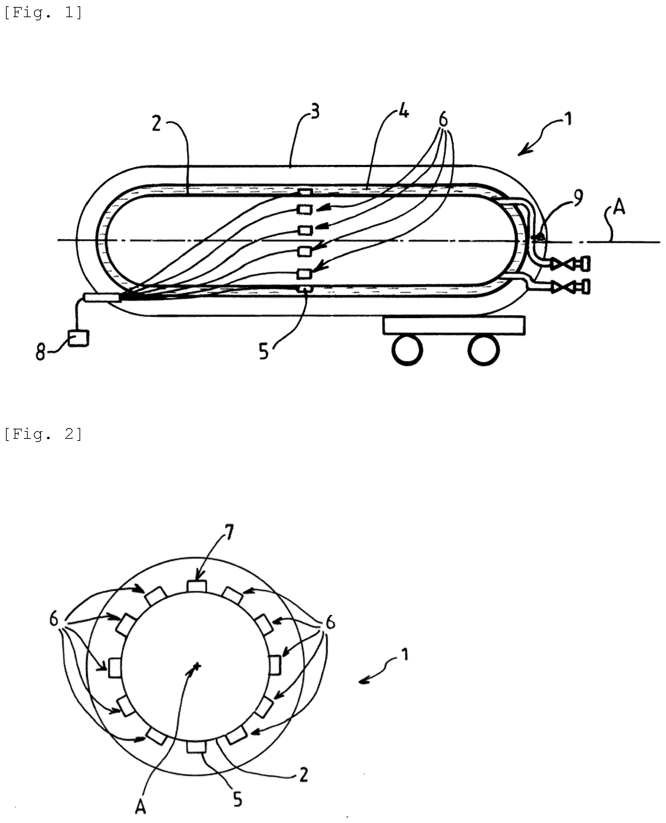

Comme visible à la [Fig. 1], la pluralité de capteurs 6 intermédiaires comprend de préférence des capteurs situés respectivement sur deux faces latérales opposées de l'enveloppe 2 interne, de part et d'autre de l'axe A longitudinal central, les capteurs 6 intermédiaires étant espacés les uns des autres verticalement entre l'extrémité inférieure et l'extrémité supérieure de l'enveloppe 2 interne. Par exemple, deux ensembles de trois à dix capteurs 6 intermédiaires chacun sont disposés respectivement sur deux faces latérales opposées de l'enveloppe 2 interne. Dans l'exemple non limitatif de la [Fig. 1] il y a cinq capteurs 6 intermédiaires sur chaque face latérale entre les capteurs inférieur 5 et supérieur 7. Bien entendu, il pourrait y en avoir moins (deux, trois, quatre) ou plus (six, sept huit, neuf, dix...).

Les capteurs 6 intermédiaires situés de part et d'autre de l'axe A longitudinal sont par exemple disposés symétriquement c'est-à-dire disposés à des hauteurs identiques. Bien entendu, il peut être prévu des dispositions décalées verticalement entre les deux ensembles de capteurs 6.

Pour un diamètre d'enveloppe 2 interne compris entre 500 et 2800mm, notamment 2400mm, les capteurs 6 intermédiaires sont de préférence au moins au nombre de cinq ou six et espacés les uns des autres d'environ 200 à 600mm sur la circonférence et notamment environ 500mm. Les capteurs peuvent être espacés de façon régulière sur la circonférence ou verticalement ou de façon régulière.

Pour une mesure plus précise, le nombre de capteurs 6 peut être plus important et leur espacement plus réduit pour couvrir presque toute la hauteur de l'enveloppe 2 interne.

Comme visible à la [Fig. 1], le réservoir 1 comprend de préférence un organe 8 électronique de stockage et de traitement de données comprenant un microprocesseur et/ou un calculateur par exemple. Cet organe 8 électronique est relié (par voie filaire ou sans fil) à l'ensemble de capteurs 5, 6, 7 de température et est configuré pour recevoir les valeurs de températures mesurées par lesdits capteurs.

Cette acquisition de données embarquée peut utiliser un PLC (contrôleur logique programmable) et pourra soit être téléchargée au retour du réservoir dans une station centrale et/ou soit être transmise sans fil, par exemple via une communication GSM par exemple.

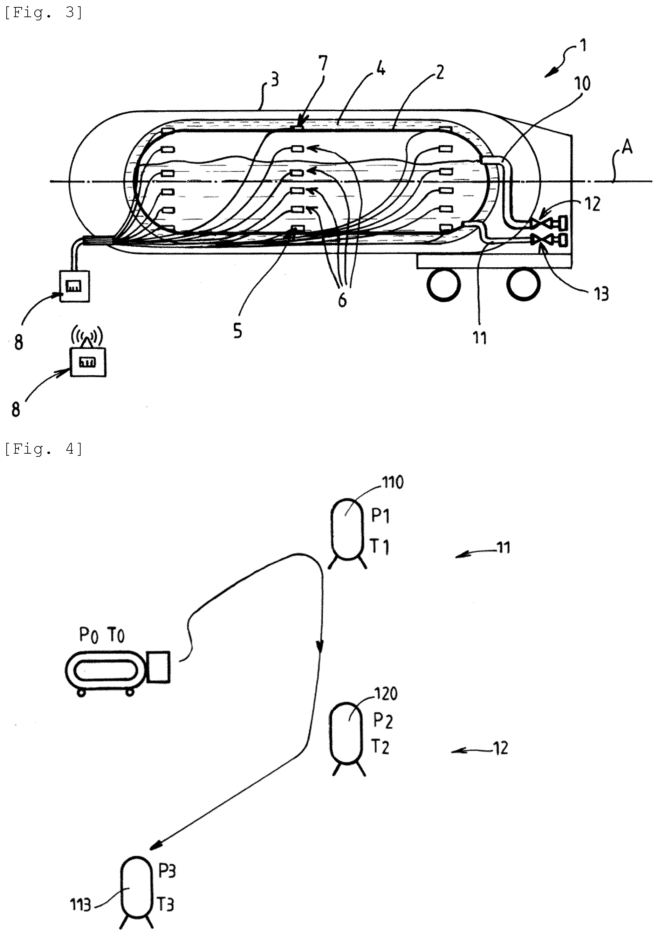

Cet organe 8 électronique monté sur le réservoir ou distant (cf. la [Fig. 3] qui représente les deux cas) est configuré pour déterminer au moins l'un parmi : la température du fluide dans le réservoir, le niveau de liquide dans le réservoir 1, le volume de liquide dans le réservoir 1. En particulier, la pluralité de capteurs permet de déterminer plus précisément le niveau de liquide via les mesures de température ainsi que la stratification de la température dans l'enveloppe 2 interne.

De préférence, les parties électriques (câbles de liaisons entre les capteurs et l'organe 8 électronique sont disposés et s'étendent vers la partie avant du réservoir 1 dans l'espace inter-parois. La sortie de la circuiterie électrique vers l'organe 8 placé à l'extérieur du réservoir est ainsi située à l'avant du réservoir, de préférence à l'opposé de la circuiterie fluidique détaillées ci-après. Ces traversés électriques situées à l'avant du réservoir permettent de les localiser en dehors de la zone à atmosphère potentiellement explosive (vapeurs de gaz inflammable).

Le réservoir 1 comprend en effet classiquement un ensemble de conduite(s) 10, 11 munie(s) de vanne(s) 12, 13 raccordée(s) à l'enveloppe 2 interne et débouchant l'extérieur du réservoir 1 pour le remplissage et le soutirage de l'enveloppe 2 interne. De plus, le réservoir 1 comprend de préférence un dispositif de mise en pression permettant de soutirer du liquide, de le réchauffer et de le réinjecter dans l'enveloppe 2 interne en vue d'augmenter la pression dans l'enveloppe 2. Un tel réchauffeur de mise en pression peut comprendre un faisceau de tubes (avec ou sans ailettes) dont la fonction est de vaporiser le liquide qui l'alimente par gravité. Le gaz ainsi produit est renvoyé dans la phase gazeuse de l'enveloppe 2 interne, assurant ainsi la mise en pression nécessaire au transfert direct du liquide ou à l'amorçage d'une pompe de transfert. Cette circuiterie fluidique est de préférence disposée à l'autre extrémité arrière du réservoir 1.

Une armoire de commande peut être prévue à l'arrière du réservoir pour abriter et regrouper les accessoires de conduite, de contrôle et de sécurité nécessaires à l'exploitation du réservoir 1, notamment robinets, soupapes, manomètres, niveau, compteur liquide, etc.

L'étanchéité des accessoires est vérifiée de préférence à basse température.

Un capteur 9 de mesure de la pression dans l'enveloppe 2 interne peut être prévu et peut le cas échant fournir sa mesure à l'organe 8 électronique.

La variante de réalisation de la [Fig. 3] se distingue de celle de la [Fig. 2] en ce que l'ensemble de capteurs de température comprend plusieurs groupes de capteurs 5, 6, 7 situés à différents emplacements longitudinaux distincts selon la direction A longitudinale. Ainsi, dans l'exemple de la [Fig. 3] il y a trois groupes de capteurs répartis longitudinalement (au lieu d'un groupe de capteurs selon la [Fig. 1]). Les trois groupes de capteurs sont répartis comme suit : un au milieu et deux respectivement à proximité des deux extrémités longitudinales de l'enveloppe 2 interne. Bien entendu, des configurations avec deux groupes de capteurs ou quatre ou plus peuvent être envisagées.

Un tel réservoir permet de mieux connaitre la répartition et les températures des phases gazeuse et liquide. Ces informations de température permettent ainsi d'adapter les trajets et remplissages des stations à approvisionner en fluide cryogénique. Ceci permet de limiter le gaz de vaporisation (« boil-off ») et le rejet de gaz dans l'atmosphère.

Ceci permet d'améliorer la récupération de la phase gazeuse engendrée par la montée en pression lorsque le réservoir 1 revient au centre de conditionnement (source liquide telle que liquéfacteur). La connaissance et la maîtrise de la température du gaz dépressurisé au liquéfacteur a un impact significatif sur le cycle d'un processus de re-condensation. Ceci permet une optimisation du processus de recyclage de la phase gazeuse.

Les mesures de températures permettent de déterminer plus précisément le niveau de liquide à l'intérieur de l'enveloppe 2 interne, en particulier lors du déchargement ou du stationnement du réservoir 1 (en cas notamment de stratification à l'intérieur de l'enveloppe 2 interne).

Ceci permet une meilleure surveillance du contenu et améliore la fiabilité de la logistique en permettant une vérification des calculs de quantités de fluide livrées.

Pour la logistique de livraisons multiples de fluide, la température du liquide mesurée a un impact significatif sur la gestion de la pression de la station à livrer. En effet, des stations 11, 12, 13 peuvent avoir des besoins de fluide relativement plus chaud ou plus froid (par exemple hydrogène liquide à -240°C à 3 bar de pression ou -240°C à une pression de 9 bar). Cette mesure de température dans le réservoir 1 mobile permet d'adapter la chronologie des livraisons (du plus froid au plus chaud par exemple). Pour les stations ayant besoin de fluide relativement plus chaud, le fluide relativement plus froid du réservoir 1 pourra être utilisé le cas échant pour réguler la pression dans le réservoir 1. Ceci permet d'améliorer l'efficacité de pompage au niveau de la station livrée. La fiabilité de la logistique est également améliorée (pas besoin de ventilation car pas de dégazage par exemple).

Ces mesures de température peuvent permettre d'anticiper la chute de pression dans l'enveloppe 2 interne après une procédure de freinage du conducteur (prévue pour abaisser la pression via un mélange des deux phases) afin d'éviter la ventilation de la remorque sur le site livré.

De plus, en cas de livraisons successives, les mesures de températures (et éventuellement de pression) permettent de calculer à l'avance les conditions thermodynamiques d'équilibre dans l'enveloppe 2 interne après une livraison et si ces conditions sont compatibles avec les exigences thermodynamiques pour la livraison suivante.

En effet, lorsqu'il y a, préalablement à la livraison de fluide cryogénique à la première station 11, une étape d'augmentation de la pression dans le réservoir 1 cryogénique mobile via un apport déterminé d'énergie (en prélevant du fluide cryogénique qui est réchauffé avant d'être réinjecté dans le réservoir), Il peut être calculé, sur la base des mesures de température et de pression initiales et éventuellement en cours de réchauffage dans l'enveloppe 2 interne et de la quantité livrée, les conditions de pression et de température d'équilibre futures dans l'enveloppe 2 interne à l'issue de la livraison de fluide cryogénique. Si ces conditions rendent les conditions incompatibles avec une livraison ultérieure à une autre station 12, la première livraison peut être interrompue prématurément par exemple.

Ces calculs peuvent utiliser des équations ou modèles du type du premier principe de la thermodynamique appliqué au volume fermé formé par le réservoir.

## Revendications

1. Réservoir cryogénique mobile pour le transport de fluide cryogénique, notamment d'hydrogène ou d'hélium liquéfié comprenant une enveloppe (2) interne destinée à contenir le fluide cryogénique, une enveloppe (3) externe disposée autour de l'enveloppe (2) interne et délimitant un espacement entre les deux enveloppes (2, 3), ledit espacement contenant un isolant (4) thermique, la première enveloppe (2) ayant une forme générale cylindrique s'étendant selon un axe (A) longitudinal central, en configuration de transport et d'utilisation du réservoir (1), l'axe (A) longitudinal central étant orienté horizontalement, le réservoir (1) comprenant un ensemble de capteurs de température mesurant la température du fluide dans l'enveloppe (2) interne, et un capteur (9) de mesure de la pression dans l'enveloppe (2) interne, **caractérisé en ce que** l'ensemble de capteurs de température est situé sur la face externe de l'enveloppe (2) interne et mesurent la température de ladite enveloppe (2), l'ensemble de capteurs de température comprenant un capteur (5) inférieur disposé au niveau de l'extrémité inférieure de l'enveloppe (2) interne située sous l'axe (A) longitudinal central, l'ensemble de capteurs de température comprenant en outre une pluralité de capteurs (6) intermédiaires répartis sur deux faces latérales de l'enveloppe (2) interne de part et d'autre de l'axe (A) longitudinal central, la pluralité de capteurs (6) intermédiaires étant répartis verticalement entre l'extrémité inférieure de l'enveloppe (2) interne située sous l'axe (A) longitudinal central et l'extrémité supérieure de l'enveloppe (2) interne située au-dessus de l'axe (A) longitudinal central.

2. Réservoir selon la revendication 1, **caractérisé en ce que** l'ensemble de capteurs (5, 6, 7) de température est situé dans la partie centrale du réservoir (1) entre les deux extrémités longitudinales.

3. Réservoir selon la revendication 1 ou 2, **caractérisé en ce que** la pluralité de capteurs (6) intermédiaires comprend deux ensembles de trois à dix capteurs chacun, les deux ensembles de capteurs étant situés respectivement sur deux faces latérales opposées de l'enveloppe (2) interne, de part et d'autre de l'axe (A) longitudinal central, les capteurs (6) étant espacés les uns des autres verticalement entre l'extrémité inférieure et l'extrémité supérieure de l'enveloppe (2) interne.

4. Réservoir selon la revendication 3, **caractérisé en ce que** les deux ensembles de capteurs (6) intermédiaires comprennent chacun quatre, cinq, six, sept ou huit capteurs (6).

5. Réservoir selon l'une quelconque des revendications 1 à 4, **caractérisé en ce que** l'ensemble de capteurs de température comprend un capteur (7) supérieur disposé au niveau de l'extrémité supérieure de l'enveloppe (2) interne située au-dessus de l'axe (A) longitudinal central.

6. Réservoir selon l'une quelconque des revendications 1 à 5, **caractérisé en ce que** l'ensemble de capteurs de température comprend plusieurs groupes de capteurs (5, 6, 7) situé à deux emplacement longitudinaux distincts selon la direction (A) longitudinale, chacun des deux groupes de capteurs de température comprenant une pluralité de capteurs (6) intermédiaires répartis sur deux faces latérales de l'enveloppe (2) interne de part et d'autre de l'axe longitudinal central et répartis verticalement entre l'extrémité inférieure de l'enveloppe située sous l'axe (A) longitudinal central et l'extrémité supérieure de l'enveloppe située au-dessus de l'axe (A) longitudinal central.

7. Réservoir selon l'une quelconque des revendications 1 à 6, **caractérisé en ce que** qu'il comprend un organe (8) électronique de stockage et de traitement de données comprenant un microprocesseur et/ou un calculateur, ledit organe (8) électronique étant relié à l'ensemble de capteurs (5, 6, 7) de température et étant configuré pour recevoir les valeurs de températures mesurées par lesdits capteurs et déterminer au moins l'un parmi : la température du fluide dans le réservoir, le niveau de liquide dans le réservoir (1), le volume de liquide dans le réservoir (1).

8. Réservoir selon l'une quelconque des revendications 1 à 7, **caractérisé en ce que** qu'il comprend un ensemble de conduite(s) (10, 11) munie(s) de vanne(s) (12, 13) raccordée(s) à l'enveloppe (2) interne et débouchant l'extérieur du réservoir (1) pour le remplissage et le soutirage de l'enveloppe (2) interne.

9. Réservoir selon l'une quelconque des revendications 1 à 8, **caractérisé en ce que** qu'il comprend au moins un capteur (6) intermédiaire situé à position verticale de l'enveloppe (2) interne correspondant à un niveau maximal de remplissage en liquide du réservoir (1) et notamment au niveau d'arrêt de remplissage dudit réservoir (1), correspondant par exemple entre 90 et 98%, et notamment 94% du volume en eau de l'enveloppe (2) interne.

10. Procédé d'approvisionnement en fluide cryogénique d'une pluralité de stations (11, 12, 13) de stockage et d'utilisation de fluide cryogénique, l'approvisionnement des stations (11, 12, 13) étant réalisé au moyen d'au moins un réservoir (1) cryogénique mobile conforme à l'une quelconque des revendications 1 à 9, comprenant un capteur (9) de mesure de la pression dans l'enveloppe (2) interne dans lequel les stations (11, 12, 13) de stockage et d'utilisation de fluide comportent chacune un stockage (110, 120, 130) de fluide gaz liquéfié configuré pour stocker le fluide cryogénique à des conditions thermodynamiques de pression et de température déterminées, le procédé comprenant une étape de mesure de la température et de la pression du fluide cryogénique dans le réservoir (1) cryogénique mobile, une étape de lecture des conditions thermodynamiques déterminées de température et de pression de chacun des stockage (110, 120, 130) de fluide gaz liquéfié des stations, le procédé comprenant une étape de livraison de fluide cryogénique auxdites stations avec des quantités de fluide respectives en fonction de la température et de la pression du fluide cryogénique mesurées dans le réservoir (1) cryogénique mobile et des conditions thermodynamiques déterminées de température et de pression de chacun des stockage (110, 120, 130) de fluide gaz liquéfié des stations.

11. Procédé d'approvisionnement selon la revendication 10 comprenant une livraison de fluide cryogénique successivement à première station (11) puis à une seconde station (12), **caractérisé en ce qu'**il comporte, préalablement à la livraison de fluide cryogénique à la première station (11), une étape d'augmentation de la pression dans le réservoir (1) cryogénique mobile via un apport déterminé d'énergie en prélevant du fluide cryogénique dans le réservoir (1) cryogénique mobile qui est réchauffé avant d'être réinjecté dans le réservoir (1) cryogénique mobile, le procédé comprenant une étape de calcul des conditions de pression et de température d'équilibre futures dans le réservoir (1) cryogénique mobile à l'issue de la livraison de fluide cryogénique à partir de la quantité d'énergie apportée précitée et de la température et de la pression du fluide cryogénique dans le réservoir (1) cryogénique mobile, le procédé comprenant une interruption de la livraison de fluide cryogénique à la première station (11) lorsque les conditions de pression et de température d'équilibre futures dans le réservoir (1) cryogénique mobile calculées sont supérieures aux conditions thermodynamiques déterminées de température et de pression du stockage de la seconde station (12).

12. Procédé d'approvisionnement selon la revendication 10 ou 11, **caractérisé en ce que** l'étape de livraison de fluide cryogénique auxdites stations est réalisé selon un ordre chronologique déterminé fonction de la température et de la pression du fluide cryogénique dans le réservoir (1) cryogénique mobile et des conditions thermodynamiques déterminées de température et de pression de chacun des stockage (110, 120, 130) de fluide gaz liquéfié des stations.

## Patentansprüche

1. Ein mobiler kryogener Behälter für den Transport von kryogenem Fluid, insbesondere von verflüssigtem Wasserstoff oder Helium, umfassend eine innere Hülle (2), die dazu bestimmt ist, das kryogene Fluid aufzunehmen, eine äußere Hülle (3), die um die innere Hülle (2) herum angeordnet ist und einen Zwischenraum zwischen den beiden Hüllen (2, 3) begrenzt, wobei der genannte Zwischenraum ein Wärmeisolationsmittel (4) enthält, wobei die erste Hülle (2) eine allgemein zylindrische Form hat, die sich entlang einer zentralen Längsachse (A) erstreckt, in einer Transport- und Nutzungskonfiguration des Behälters (1), wobei die zentrale Längsachse (A) horizontal ausgerichtet ist, wobei der Behälter (1) einen Satz von Temperatursensoren umfasst, die die Temperatur des Fluids in der inneren Hülle (2) messen, und einen Sensor (9) zur Messung des Drucks in der inneren Hülle (2), **dadurch gekennzeichnet, dass** der Satz von Temperatursensoren sich an der Außenfläche der inneren Hülle (2) befindet und die Temperatur der genannten Hülle (2) misst, wobei der Satz von Temperatursensoren einen unteren Sensor (5) umfasst, der am unteren Ende der inneren Hülle (2) angeordnet ist, das sich unterhalb der zentralen Längsachse (A) befindet, wobei der Satz von Temperatursensoren ferner eine Vielzahl von Zwischensensoren (6) umfasst, die auf zwei Seitenflächen der inneren Hülle (2) beiderseits der zentralen Längsachse (A) verteilt sind, wobei die Vielzahl von Zwischensensoren (6) vertikal zwischen dem unteren Ende der inneren Hülle (2), das sich unterhalb der zentralen Längsachse (A) befindet, und dem oberen Ende der inneren Hülle (2), das sich oberhalb der zentralen Längsachse (A) befindet, verteilt ist.

2. Behälter nach Anspruch 1, **dadurch gekennzeichnet, dass** der Satz von Temperatursensoren (5, 6, 7) sich im zentralen Teil des Behälters (1) zwischen den beiden Längsenden befindet.

3. Behälter nach Anspruch 1 oder 2, **dadurch gekennzeichnet, dass** die Vielzahl von Zwischensensoren (6) zwei Sätze von jeweils drei bis zehn Sensoren umfasst, wobei die beiden Sätze von Sensoren jeweils auf zwei gegenüberliegenden Seitenflächen der inneren Hülle (2) beiderseits der zentralen Längsachse (A) angeordnet sind, wobei die Sensoren (6) vertikal zwischen dem unteren Ende und dem oberen Ende der inneren Hülle (2) voneinander beabstandet sind.

4. Behälter nach Anspruch 3, **dadurch gekennzeichnet, dass** die beiden Sätze von Zwischensensoren (6) jeweils vier, fünf, sechs, sieben oder acht Sensoren (6) umfassen.

5. Behälter nach einem der Ansprüche 1 bis 4, **dadurch gekennzeichnet, dass** der Satz von Temperatursensoren einen oberen Sensor (7) umfasst, der am oberen Ende der inneren Hülle (2) angeordnet ist, das sich oberhalb der zentralen Längsachse (A) befindet.

6. Behälter nach einem der Ansprüche 1 bis 5, **dadurch gekennzeichnet, dass** der Satz von Temperatursensoren mehrere Gruppen von Sensoren (5, 6, 7) umfasst, die sich an zwei verschiedenen Längspositionen entlang der Längsrichtung (A) befinden, wobei jede der beiden Gruppen von Temperatursensoren eine Vielzahl von Zwischensensoren (6) umfasst, die auf zwei Seitenflächen der inneren Hülle (2) beiderseits der zentralen Längsachse verteilt sind und vertikal zwischen dem unteren Ende der Hülle, das sich unterhalb der zentralen Längsachse (A) befindet, und dem oberen Ende der Hülle, das sich oberhalb der zentralen Längsachse (A) befindet, verteilt sind.

7. Behälter nach einem der Ansprüche 1 bis 6, **dadurch gekennzeichnet, dass** er eine elektronische Datenspeicher- und -verarbeitungseinheit (8) umfasst, die einen Mikroprozessor und/oder einen Rechner aufweist, wobei die genannte elektronische Einheit (8) mit dem Satz von Temperatursensoren (5, 6, 7) verbunden ist und so konfiguriert ist, dass sie die von den genannten Sensoren gemessenen Temperaturwerte empfängt und mindestens eines von Folgendem bestimmt: die Temperatur des Fluids im Behälter, den Flüssigkeitsstand im Behälter (1), das Flüssigkeitsvolumen im Behälter (1).

8. Behälter nach einem der Ansprüche 1 bis 7, **dadurch gekennzeichnet, dass** er einen Satz von Leitung(en) (10, 11) umfasst, die mit Ventil(en) (12, 13) versehen sind, die mit der inneren Hülle (2) verbunden sind und zur Außenseite des Behälters (1) münden, um die innere Hülle (2) zu befüllen und zu entleeren.

9. Behälter nach einem der Ansprüche 1 bis 8, **dadurch gekennzeichnet, dass** er mindestens einen Zwischensensor (6) umfasst, der sich in einer vertikalen Position der inneren Hülle (2) befindet, die einem maximalen Füllstand mit Flüssigkeit des Behälters (1) und insbesondere dem Füllstoppniveau des genannten Behälters (1) entspricht, was beispielsweise zwischen 90 und 98 % und insbesondere 94 % des Wasservolumens der inneren Hülle (2) entspricht.

10. Ein Verfahren zur Versorgung einer Vielzahl von Lager- und Verwendungsstationen (11, 12, 13) mit kryogenem Fluid, wobei die Versorgung der Stationen (11, 12, 13) mittels mindestens eines mobilen kryogenen Behälters (1) nach einem der Ansprüche 1 bis 9 erfolgt, der einen Sensor (9) zur Messung des Drucks in der inneren Hülle (2) umfasst, wobei die Lager- und Verwendungsstationen (11, 12, 13) für das Fluid jeweils eine Lagerstätte (110, 120, 130) für verflüssigtes Gasfluid umfassen, die so konfiguriert ist, dass sie das kryogene Fluid bei bestimmten thermodynamischen Druck- und Temperaturbedingungen lagert, wobei das Verfahren einen Schritt der Messung der Temperatur und des Drucks des kryogenen Fluids im mobilen kryogenen Behälter (1), einen Schritt des Auslesens der bestimmten thermodynamischen Temperatur- und Druckbedingungen jeder der Lagerstätten (110, 120, 130) für verflüssigtes Gasfluid der Stationen umfasst, wobei das Verfahren einen Schritt der Lieferung von kryogenem Fluid an die genannten Stationen mit jeweiligen Fluidmengen in Abhängigkeit von der im mobilen kryogenen Behälter (1) gemessenen Temperatur und dem Druck des kryogenen Fluids und von den bestimmten thermodynamischen Temperatur- und Druckbedingungen jeder der Lagerstätten (110, 120, 130) für verflüssigtes Gasfluid der Stationen umfasst.

11. Verfahren zur Versorgung nach Anspruch 10, umfassend eine Lieferung von kryogenem Fluid nacheinander an eine erste Station (11) und dann an eine zweite Station (12), **dadurch gekennzeichnet, dass** es vor der Lieferung von kryogenem Fluid an die erste Station (11) einen Schritt der Druckerhöhung im mobilen kryogenen Behälter (1) durch einen bestimmten Energieeintrag umfasst, indem kryogenes Fluid aus dem mobilen kryogenen Behälter (1) entnommen wird, das erwärmt wird, bevor es wieder in den mobilen kryogenen Behälter (1) eingespeist wird, wobei das Verfahren einen Schritt der Berechnung der zukünftigen Gleichgewichts-Druck- und -Temperaturbedingungen im mobilen kryogenen Behälter (1) nach der Lieferung von kryogenem Fluid auf der Grundlage der vorgenannten zugeführten Energiemenge und der Temperatur und des Drucks des kryogenen Fluids im mobilen kryogenen Behälter (1) umfasst, wobei das Verfahren eine Unterbrechung der Lieferung von kryogenem Fluid an die erste Station (11) umfasst, wenn die berechneten zukünftigen Gleichgewichts-Druck- und -Temperaturbedingungen im mobilen kryogenen Behälter (1) höher sind als die bestimmten thermodynamischen Temperatur- und Druckbedingungen der Lagerstätte der zweiten Station (12).

12. Verfahren zur Versorgung nach Anspruch 10 oder 11, **dadurch gekennzeichnet, dass** der Schritt der Lieferung von kryogenem Fluid an die genannten Stationen gemäß einer bestimmten chronologischen Reihenfolge in Abhängigkeit von der Temperatur und dem Druck des kryogenen Fluids im mobilen kryogenen Behälter (1) und den bestimmten thermodynamischen Temperatur- und Druckbedingungen jeder der Lagerstätten (110, 120, 130) für verflüssigtes Gasfluid der Stationen durchgeführt wird.

## Claims

1. A mobile cryogenic tank for transporting cryogenic fluid, in particular liquefied hydrogen or helium, comprising an inner shell (2) intended to contain the cryogenic fluid, an outer shell (3) disposed around the inner shell (2) and defining a space between the two shells (2, 3), said space containing a thermal insulant (4), the first shell (2) having a generally cylindrical shape extending along a central longitudinal axis (A), in a transport and use configuration of the tank (1), the central longitudinal axis (A) being horizontally oriented, the tank (1) comprising a set of temperature sensors measuring the temperature of the fluid in the inner shell (2), and a sensor (9) for measuring the pressure in the inner shell (2), **characterized in that** the set of temperature sensors is located on the outer face of the inner shell (2) and measures the temperature of said shell (2), the set of temperature sensors comprising a lower sensor (5) disposed at the lower end of the inner shell (2) located below the central longitudinal axis (A), the set of temperature sensors further comprising a plurality of intermediate sensors (6) distributed on two lateral faces of the inner shell (2) on either side of the central longitudinal axis (A), the plurality of intermediate sensors (6) being distributed vertically between the lower end of the inner shell (2) located below the central longitudinal axis (A) and the upper end of the inner shell (2) located above the central longitudinal axis (A).

2. The tank according to claim 1, **characterized in that** the set of temperature sensors (5, 6, 7) is located in the central part of the tank (1) between the two longitudinal ends.

3. The tank according to claim 1 or 2, **characterized in that** the plurality of intermediate sensors (6) comprises two sets of three to ten sensors each, the two sets of sensors being located respectively on two opposite lateral faces of the inner shell (2), on either side of the central longitudinal axis (A), the sensors (6) being spaced from each other vertically between the lower end and the upper end of the inner shell (2).

4. The tank according to claim 3, **characterized in that** the two sets of intermediate sensors (6) each comprise four, five, six, seven or eight sensors (6).

5. The tank according to any one of claims 1 to 4, **characterized in that** the set of temperature sensors comprises an upper sensor (7) disposed at the upper end of the inner shell (2) located above the central longitudinal axis (A).

6. The tank according to any one of claims 1 to 5, **characterized in that** the set of temperature sensors comprises several groups of sensors (5, 6, 7) located at two distinct longitudinal locations along the longitudinal direction (A), each of the two groups of temperature sensors comprising a plurality of intermediate sensors (6) distributed on two lateral faces of the inner shell (2) on either side of the central longitudinal axis and distributed vertically between the lower end of the shell located below the central longitudinal axis (A) and the upper end of the shell located above the central longitudinal axis (A).

7. The tank according to any one of claims 1 to 6, **characterized in that** it comprises an electronic data storage and processing unit (8) comprising a microprocessor and/or a calculator, said electronic unit (8) being connected to the set of temperature sensors (5, 6, 7) and being configured to receive the temperature values measured by said sensors and to determine at least one of: the temperature of the fluid in the tank, the liquid level in the tank (1), the volume of liquid in the tank (1).

8. The tank according to any one of claims 1 to 7, **characterized in that** it comprises a set of conduit(s) (10, 11) provided with valve(s) (12, 13) connected to the inner shell (2) and opening to the outside of the tank (1) for filling and drawing off from the inner shell (2).

9. The tank according to any one of claims 1 to 8, **characterized in that** it comprises at least one intermediate sensor (6) located at a vertical position of the inner shell (2) corresponding to a maximum liquid filling level of the tank (1) and in particular to the filling stop level of said tank (1), corresponding for example to between 90 and 98%, and in particular 94% of the water volume of the inner shell (2).

10. A method for supplying a plurality of storage and use stations (11, 12, 13) with cryogenic fluid, the supply of the stations (11, 12, 13) being carried out by means of at least one mobile cryogenic tank (1) according to any one of claims 1 to 9, comprising a sensor (9) for measuring the pressure in the inner shell (2), wherein the storage and use stations (11, 12, 13) for the fluid each comprise a storage facility (110, 120, 130) for liquefied gas fluid configured to store the cryogenic fluid at determined thermodynamic conditions of pressure and temperature, the method comprising a step of measuring the temperature and pressure of the cryogenic fluid in the mobile cryogenic tank (1), a step of reading the determined thermodynamic conditions of temperature and pressure of each of the storage facilities (110, 120, 130) for liquefied gas fluid of the stations, the method comprising a step of delivering cryogenic fluid to said stations with respective quantities of fluid as a function of the temperature and pressure of the cryogenic fluid measured in the mobile cryogenic tank (1) and of the determined thermodynamic conditions of temperature and pressure of each of the storage facilities (110, 120, 130) for liquefied gas fluid of the stations.

11. The method for supplying according to claim 10, comprising a delivery of cryogenic fluid successively to a first station (11) and then to a second station (12), **characterized in that** it comprises, prior to the delivery of cryogenic fluid to the first station (11), a step of increasing the pressure in the mobile cryogenic tank (1) via a determined energy input by withdrawing cryogenic fluid from the mobile cryogenic tank (1) which is heated before being reinjected into the mobile cryogenic tank (1), the method comprising a step of calculating the future equilibrium pressure and temperature conditions in the mobile cryogenic tank (1) following the delivery of cryogenic fluid based on the aforementioned quantity of energy supplied and the temperature and pressure of the cryogenic fluid in the mobile cryogenic tank (1), the method comprising an interruption of the delivery of cryogenic fluid to the first station (11) when the calculated future equilibrium pressure and temperature conditions in the mobile cryogenic tank (1) are higher than the determined thermodynamic conditions of temperature and pressure of the storage facility of the second station (12).

12. The method for supplying according to claim 10 or 11, **characterized in that** the step of delivering cryogenic fluid to said stations is carried out according to a determined chronological order as a function of the temperature and pressure of the cryogenic fluid in the mobile cryogenic tank (1) and the determined thermodynamic conditions of temperature and pressure of each of the storage facilities (110, 120, 130) for liquefied gas fluid of the stations.
